# EUROPEAN PATENT APPLICATION

(11) **EP 4 131 551 A1**
(43) Date of publication of application: **08.02.2023**
(21) Application number: 21875997.5
(22) Date of filing: 28.09.2021
(51) Int. Cl.: H01M 10/0569, H01M 4/36, H01M 4/38, H01M 4/62, H01M 10/052

(54) **LITHIUM-SULFUR BATTERY HAVING HIGH ENERGY DENSITY**

(30) Priority: 29.09.2020 KR 20200126558
(71) Applicant: LG Energy Solution, Ltd., Seoul 07335 (KR)
(72) Inventor: KIM, Yonghwi, Daejeon 34122 (KR); LEE, Changhoon, Daejeon 34122 (KR); PARK, Seonghyo, Daejeon 34122 (KR)
(74) Representative: Goddar, Heinz J.
(86) International application number: PCT/KR2021/013250
(87) International publication number: WO 2022/071722

(57) **Abstract**

Disclosed is a lithium-sulfur battery with a high energy density capable of using 90% or higher of a high theoretical discharge capacity (1,675 mAh/g) of sulfur without using a nitrile-based solvent even by a sparing solvating electrolyte (SSE) system (discharge capacity: to 1,600 mAh/gs) instead of an existing catholyte system (discharge capacity: to 1,200 mAh/gs) and further maximizing the performance by using a positive electrode carbon material with a high specific surface area together. The lithium-sulfur battery comprises an electrolyte including a first solvent containing a fluorine-based ether compound, a second solvent containing a glyme-based compound, and a lithium salt; and a positive electrode including sulfur and a carbon material as active materials, wherein a utilization rate of sulfur included in the positive electrode is 90% or higher of a theoretical discharge capacity.

## Description

### [Technical Field]

The present application claims the benefit of priority based on Korean Patent Application No. 10-2020-0126558 filed on September 29, 2020, all the contents of which are incorporated herein by reference.

The present invention relates to a lithium-sulfur battery with a high energy density capable of using 90% or higher of a high theoretical discharge capacity of sulfur and more particularly, to a lithium-sulfur battery with a high energy density capable of using 90% or higher of a high theoretical discharge capacity (1,675 mAh/g) of sulfur without using a nitrile-based solvent even by a sparing solvating electrolyte (SSE) system (discharge capacity: to 1,600 mAh/gs) instead of an existing catholyte system (discharge capacity: to 1,200 mAh/gs) and further maximizing the performance by using a positive electrode carbon material with a high specific surface area together.

### [Background Art]

As an interest in energy storage technology is gradually increasing, while application fields are extended from mobile phones, tablets, laptops, and camcorders to energy of electric vehicles (EV) and hybrid electric vehicles (HEV), studies and development on electrochemical devices have been gradually increased. The electrochemical device is a field which attracts the most attention in these aspects, and even among them, the development of secondary batteries, such as a lithium-sulfur battery capable of being charging/discharging, is becoming the focus of interest. In recent years, in developing these batteries, in order to improve a capacity density and specific energy, the research and development of designs of new electrodes and batteries have been led.

Among these electrochemical devices, a lithium-sulfur battery (Li-s battery) has a high energy density (theoretical capacity), and has attracted attention as a next-generation secondary battery capable of replacing a lithium ion battery. In such a lithium-sulfur battery, the reduction reaction of sulfur and the oxidation reaction of a lithium metal occur during discharging, and at this time, sulfur forms lithium polysulfide (LiPS) having a linear structure from Ss having a cyclic structure and such a lithium-sulfur battery is characterized to exhibit a discharge voltage in stages until polysulfide is completely reduced to Li₂S.

However, in the commercialization of the lithium-sulfur battery, the largest obstacle is a lifetime, and the charge/discharge efficiency is reduced during a charge/discharge process and the lifetime of the battery is degraded. Causes of degrading the lifetime of such a lithium-sulfur battery are various, such as a side reaction of the electrolyte (deposition of byproducts due to decomposition of the electrolyte), instability of a lithium metal (dendrite is grown on a lithium negative electrode to generate a short circuit), deposition of positive electrode byproducts (elution of lithium polysulfide from the positive electrode), and the like.

That is, in a battery using a sulfur-based compound as a positive electrode active material and an alkali metal such as lithium as a negative electrode active material, elution and a shuttle phenomenon of lithium polysulfide occur during charge/discharge, the lithium polysulfide is transmitted to a negative electrode to reduce the capacity of the lithium-sulfur battery. Accordingly, the lithium-sulfur battery has a large problem of reducing the lifetime and decreasing the reactivity. That is, since the polysulfide eluted from the positive electrode has high solubility in an organic electrolyte, undesired movement (PS shuttling) to the negative electrode through the electrolyte may occur. As a result, reduction of the capacity due to irreversible loss of the positive electrode active material and a decrease in battery lifetime due to deposition of sulfur particles on the surface of the lithium metal by the side reaction will be caused.

Meanwhile, the behavior of the lithium-sulfur battery may be greatly changed according to an electrolyte, and when sulfur of the positive electrode is eluted in the electrolyte in the form of lithium polysulfide (LiPS), the electrolyte is referred to as a catholyte, and when the sulfur is almost not eluted in the form of lithium polysulfide, the electrolyte is referred to as a sparing solvating electrolyte (SSE). Since a lithium-sulfur battery using an existing catholyte system depends on a liquid reaction (catholyte type) through the generation of intermediate polysulfide having a form of Li₂Sₓ, there is a problem that a high theoretical discharge capacity (1,675 mAh/g) of sulfur is not sufficiently used and rather, the lifetime of the battery is rapidly reduced by battery degradation due to the elution of polysulfide.

On the contrary, recently, a sparing solvating electrolyte (SSE) system capable of inhibiting the elution of polysulfide has been developed to use 90% or higher of a theoretical discharge capacity of sulfur, but the SSE system almost depends on a nitrile-based solvent. In this case, since a lithium negative electrode is degraded by a reaction with the lithium negative electrode and gases are generated inside the lithium-sulfur battery, there is a lethal disadvantage in the lifetime of the battery.

Then, in the art, various studies (studies of adding a LiPS adsorbing material to a positive electrode composite, modifying a separator consisting of PE and the like in the related art, and the like) have been conducted on the lithium-sulfur battery in which sulfur as the positive electrode active material is not eluted to the electrolyte. Particularly, studies have been conducted even on an electrolyte that sulfur may perform a solid-to-solid reaction with Li₂S as a final discharge product, but have yet to yield significant results. Accordingly, it is required to develop an innovative battery with a high energy density without degrading a lithium negative electrode or generating gases in the battery even while using the SSE system capable of using 90% or higher of the theoretical discharge capacity of sulfur (it is meant that the high energy density is about 400 Wh/kg or higher or 600 Wh/L or higher, and in order to achieve the high energy density, a system of an electrolyte and a positive electrode active material capable of being driven even in 4.0 mAh/cm² or higher and porosity of 60% or less is required).

### [Disclosure]

### [Technical Problem]

Therefore, an object of the present invention is to provide a lithium-sulfur battery with a high energy density capable of using 90% or higher of a high theoretical discharge capacity (1,675 mAh/g) of sulfur without using a nitrile-based solvent even by a sparing solvating electrolyte (SSE) system (discharge capacity: to 1,600 mAh/gs) instead of an existing catholyte system (discharge capacity: to 1,200 mAh/gs) and further maximizing the performance by using a positive electrode carbon material with a high specific surface area together.

### [Technical Solution]

In order to achieve the object, the present invention provides a lithium-sulfur battery comprising: an electrolyte including a first solvent containing a fluorine-based ether compound, a second solvent containing a glyme-based compound, and a lithium salt; and a positive electrode including sulfur and a carbon material as active materials, wherein a utilization rate of sulfur included in the positive electrode is 90% or higher of a theoretical discharge capacity.

### [Advantageous Effects]

According to the lithium-sulfur battery with the high energy density according to the present invention, there is an advantage of using 90% or higher of a high theoretical discharge capacity (1,675 mAh/g) of sulfur without using a nitrile-based solvent even by a sparing solvating electrolyte (SSE) system (discharge capacity: to 1,600 mAh/gs) instead of an existing catholyte system (discharge capacity: to 1,200 mAh/gs) and further maximizing the discharge capacity and the lifetime performance of the battery by using a positive electrode carbon material with a high specific surface area together. In addition, the lithium-sulfur battery with the high energy density according to the present invention has an advantage of highly maintaining an energy density to about 400 Wh/kg or higher or 600 Wh/L or higher by including a system of the electrolyte and the positive electrode active material capable of being driven even in 4.0 mAh/cm² or higher and porosity of 60% or less.

### [Description of Drawings]

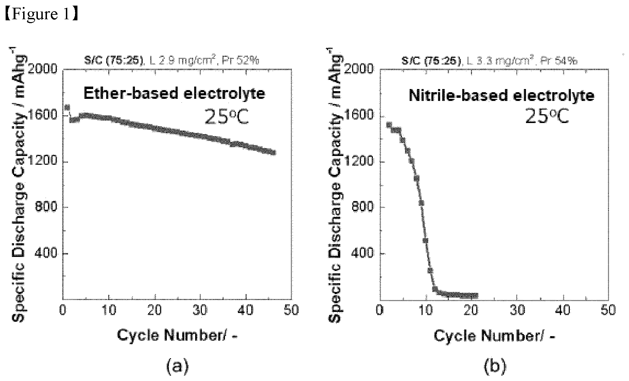

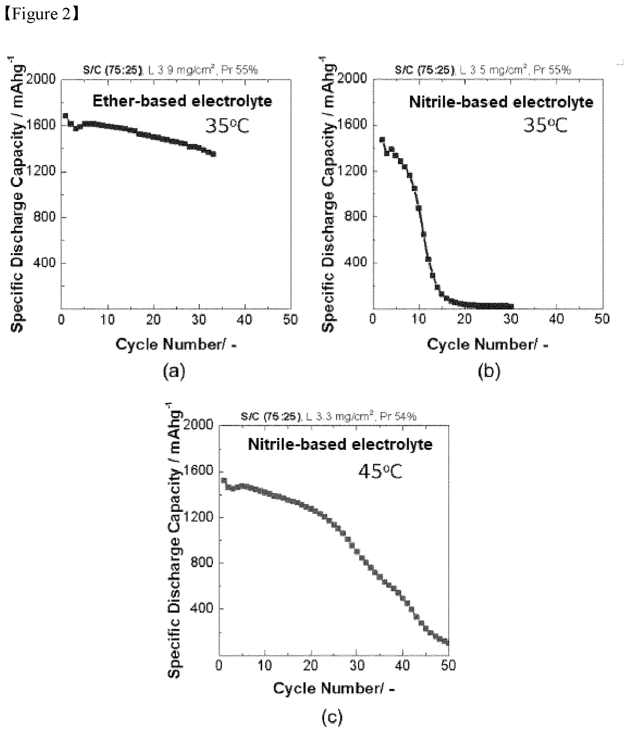

FIGS. 1 and 2 are graphs showing discharge capacities and lifetime characteristics of lithium-sulfur batteries manufactured according to an embodiment of the present invention and Comparative Example.

### [Best Mode]

Hereinafter, the present invention will be described in detail.

A lithium-sulfur battery according to the present invention comprises an electrolyte including a first solvent containing a fluorine-based ether compound, a second solvent containing a glyme-based compound, and a lithium salt; and a positive electrode including sulfur and a carbon material as active materials, wherein a utilization rate of sulfur included in the positive electrode is 90% or higher of a theoretical discharge capacity.

Recently, a sparing solvating electrolyte (SSE) system capable of inhibiting the elution of polysulfide has been developed to use 90% or higher of a theoretical discharge capacity of sulfur, but due to a characteristic of the SSE system that depends on a nitrile-based solvent, since a lithium negative electrode is degraded by a reaction with the lithium negative electrode and gases are generated inside the lithium-sulfur battery, a problem of shortening the lifetime of the battery is not solved.

Then, the present applicants have developed a lithium-sulfur battery with a high energy density of about 400 Wh/kg or higher or 600 Wh/L or higher by including a system of an electrolyte and a positive electrode active material capable of being driven even in 4.0 mAh/cm² or higher and porosity of 60% or less without degrading the lithium negative electrode or generating gases in the battery (that is, improving the lifetime) by using a stable ether-based electrolyte solvent instead of a nitrile-based electrolyte solvent lethal to the lifetime of the lithium-sulfur battery even while using the SSE system in which a sulfur utilization rate may use 90% or higher, preferably 90 to 100%, more preferably 94 to 100% of the theoretical discharge capacity. Meanwhile, the 'sulfur utilization rate' is specifically a ratio of a discharge capacity (mAh) per weight (gram) of a sulfur element included in the positive electrode of the corresponding battery to a theoretical capacity per weight of sulfur of 1,675 mAh/g (sulfur), and for example, the sulfur utilization rate is 95.5% (1,600/1,675) when the discharge capacity per weight of the sulfur element included in the positive electrode of the lithium-sulfur battery is 1,600 mAh/g (sulfur).

That is, the present applicants have found a method for compensating for the problems in the related art which have not maximized the performance of the battery even while using the SSE system and then confirmed a synergic effect between the electrolyte including the first solvent containing the fluorine-based ether compound, the second solvent containing the glyme-based compound, and the lithium salt; and the positive electrode including sulfur and the carbon material as the active materials. As a result, the present applicants complete a lithium-sulfur battery with a high energy density of about 400 Wh/kg or higher or 600 Wh/L or higher while using 90% or higher (that is, an initial discharge capacity of the battery is about 1,507 mAh/g or higher), preferably 90% to 100 %, more preferably 94% to 100% of the theoretical discharge capacity of sulfur.

Hereinafter, A) the first solvent containing the fluorine-based ether compound, B) the second solvent containing the glyme-based compound, C) the lithium salt, and D) the positive electrode included in the lithium-sulfur battery of the present invention will be described in detail.

### A) First solvent

The first solvent is an electrolyte solvent containing the fluorine-based ether compound and serves to improve the lifetime of the battery by having dissolution and solvent decomposition inhibitory effects of polysulfide to improve coulombic efficiency (C.E.) and the like of the battery. More specifically, the first solvent containing the fluorine-based ether compound has excellent structural stability of the solvent and very high stability as compared with a general organic solvent containing alkane due to fluorine substitution. Accordingly, when the first solvent is used in the electrolyte of the lithium-sulfur battery, the stability of the electrolyte may be greatly improved, thereby improving the lifetime performance of the lithium-sulfur battery.

Examples of the fluorine-based ether compound may include at least one hydrofluoroether-based (HFE type) compound selected from the group consisting of 1,1,2,2-tetrafluoroethyl 2,2,3,3-tetrafluoropropyl ether (TTE), bis(fluoromethyl)ether, 2-fluoromethyl ether, bis(2,2,2-trifluoroethyl ether, propyl 1,1,2,2-tetrafluoroethyl ether, isopropyl 1,1,2,2-tetrafluoroethyl ether, 1,1,2,2-tetrafluoroethylisobutyl ether, 1,1,2,3,3,3-hexafluoropropyl ethyl ether, 1H,1H,2'H,3H-decafluorodopropyl ether, and 1H,1H,2'H-perfluorodipropyl ether.

### B) Second solvent

The second solvent is an electrolyte solvent containing the glyme-based compound (however, fluorine is not contained) and serves to not only have lithium ionic conductivity of the electrolyte by dissolving the lithium salt, but also to smoothly perform an electrochemical reaction with lithium by eluting sulfur as the positive electrode active material.

Examples of the glyme-based compound may include at least one selected from the group consisting of dimethoxy ethane, diethoxy ethane, methoxyethoxy ethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, and polyethylene glycol methyl ethyl ether, but are not limited thereto and among them, the use of dimethoxy ethane is preferable.

### C) Lithium salt

The lithium salt is an electrolyte salt used to increase ionic conductivity, and may be used without limitation so long as the lithium salt is commonly used in the art. Specific examples of the lithium salt may include at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, chloroboran lithium, low aliphatic carboxylic acid lithium having 4 carbon atoms or less, 4-phenyl boric acid lithium, and lithium imide.

The concentration of the lithium salt may be determined in consideration of ionic conductivity and the like, and for example, may be 0.1 to 2 M, preferably 0.5 to 1 M, more preferably 0.5 to 0.75 M. When the concentration of the lithium salt is less than the above range, it may be difficult to secure the ionic conductivity suitable for the battery driving, and when the concentration thereof is more than the above range, the viscosity of the electrolyte is increased to reduce the mobility of lithium ions or the decomposition reaction of the lithium salt itself is increased to degrade the performance of the battery.

In the electrolyte including the first solvent, the second solvent and the lithium salt, a molar ratio of the lithium salt, the second solvent and the first solvent may be 1:0.5 to 3:4.1 to 15. Further, in an embodiment of the present invention, like that the molar ratio of the lithium salt, the second solvent and the first solvent may be 1:2:4 to 13 or 1:3:3 to 10 or 1:4:5 to 10, in the electrolyte included in the lithium-sulfur battery of the present invention, the first solvent containing the fluorine-based ether compound is included in a higher content ratio than the second solvent containing the glyme-based compound. As such, when the first solvent containing the fluorine-based ether compound is included in the higher content ratio than the second solvent containing the glyme-based compound, there is an advantage in that the generation of polysulfide is inhibited to implement a battery capacity close to the theoretical capacity of sulfur and prevent the reduction of the battery capacity according to the use of the battery. Accordingly, it is preferred that the first solvent containing the fluorine-based ether compound is set to be included in a higher content ratio than the second solvent containing the glyme-based compound if possible.

### D) Positive electrode

The lithium-sulfur battery according to the present invention includes a positive electrode including sulfur and a carbon material as active materials, a negative electrode, a separator interposed between the positive electrode and the negative electrode, and the electrolyte including A) the first solvent containing the fluorine-based ether compound, B) the second solvent containing the glyme-based compound, and C) the lithium salt described above, and hereinafter, the positive electrode will be described in detail.

The positive electrode included in the lithium-sulfur battery according to the present invention includes a positive electrode active material, a binder, a conductive material, etc. The positive electrode active material may be applied to a general lithium-sulfur battery, and for example, may include an elemental sulfur (Ss), a sulfur-based compound or a mixture thereof, and the sulfur-based compound may be specifically, Li₂Sₙ (n ≥ 1), an organic sulfur compound, a sulfur-carbon composite ((C₂Sₓ)ₙ: x = 2.5 to 50, n ≥ 2), or the like. Further, the positive electrode active material may include a sulfur-carbon composite, and since the sulfur material has no electric conductivity alone, the sulfur material may be composed and used with a conductive material.

The sulfur-carbon composite may have a particle size of 1 to 100 µm. When the particle size of the sulfur-carbon composite is less than 1 µm, the resistance between particles increases, so that overvoltage may occur on the electrodes of the lithium-sulfur battery. When the particle size is more than 100 µm, a surface area per unit weight is decreased to reduce a wetting area with the electrolyte in the electrode and a reaction site between lithium ions, and the transfer amount of electrons to the composite size is decreased and the reaction is delayed to reduce the discharge capacity of the battery.

The sulfur (S) may be included in a content of 60 to 80 wt%, preferably 67.5 to 75 wt% with respect to the total weight of the positive electrode. The content of sulfur in the positive electrode of the general lithium-sulfur battery is about 40 to 60 wt% with respect to the total weight of the positive electrode, and according to the present invention, even though the sulfur is used at a significantly higher content therethan, an initial discharge capacity of about 1,550 mAh/g or higher is shown under the electrolyte condition of the present invention. When the sulfur is used less than 60 wt% with respect to the total weight of the positive electrode, there is a problem that the energy density of the battery may be reduced, and when the sulfur is used more than 80 wt%, there may be a problem that the conductivity in the electrode is decreased and the stability of the electrode is decreased.

The carbon material (alternatively, sulfur support material) constituting the sulfur-carbon composite has porosity, and particularly, the carbon material used as the positive electrode active material of the present invention has characteristics of high specific surface area (3,000 m²/g or higher) and a high pore volume (0.7 to 3 cm³/g), so that the driving at a high capacity (1,575 to 1,675 mAh/g) is enabled in the electrolyte.

The porous carbon material may exemplify all carbon materials satisfying a pore volume of 0.7 to 3 cm³/g, and specifically, may exemplify at least one selected from the group consisting of graphite; graphene; reduced graphene oxide (rGO); carbon black such as Denka black, acetylene black, Ketjen black, channel black, furnace black, lamp black, and thermal black; carbon nanotube (CNT) such as single wall carbon nanotube (SWCNT) and multi-wall carbon nanotube (MWCNT); carbon fiber such as graphite nanofiber (GNF), carbon nanofiber (CNF), and activated carbon fiber (ACF); and activated carbon, which satisfy the pore volume of 0.7 to 3 cm³/g. In addition, the shape thereof may be a spherical shape, a rod shape, a bed shape, a plate shape, a tube shape, a bulk shape, or the like.

The positive electrode active material including the sulfur and the carbon material may be contained in an amount of 80 to 99 parts by weight, preferably 90 to 95 parts by weight, based on 100 parts by weight of the total weight of the positive electrode. When the content of the positive electrode active material is less than 80 parts by weight based on 100 parts by weight of the total weight of the positive electrode, there may be a problem that the energy density of the battery is decreased, and when the content thereof is more than 99 parts by weight, there may be a problem that the conductivity in the electrode is lowered and the stability of the electrode is lowered.

Meanwhile, the positive electrode of the lithium-sulfur battery according to the present invention may further include a binder and a conductive material. In addition, in the positive electrode, a base solid containing the active material, the binder, and the conductive material may be located on a current collector.

The binder is a component for assisting in binding of the positive electrode active material, the conductive material, and the like and binding to the current collector, and for example, may use at least one selected from the group consisting of polyvinylidene fluoride (PVdF), polyvinylidenfluoride-polyhexafluoropropylene copolymer (PVdF/HFP), polyvinyl acetate, polyvinyl alcohol, polyvinyl ether, polyethylene, polyethylene oxide, alkylated polyethylene oxide, polypropylene, polymethyl (meth)acrylate, polyethyl (meth)acrylate, polytetrafluoroethylene (PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluorine rubber, carboxymethylcellulose (CMC), starch, hydroxypropylcellulose, regenerated cellulose, and mixtures thereof, but is not necessarily limited thereto.

The binder is typically added with 1 to 50 parts by weight, preferably 3 to 15 parts by weight, based on 100 parts by weight of the total weight of the positive electrode. If the content of the binder is less than 1 parts by weight, the adhesion between the positive electrode active material and the current collector may be insufficient, and when the content of the binder is more than 50 parts by weight, the adhesion is improved, but the content of the positive electrode active material is reduced, so that the battery capacity may be lowered.

The conductive material included in the positive electrode is not particularly limited as long as it has excellent electrical conductivity without causing side reactions in an internal environment of the battery and without causing a chemical change in the corresponding battery. Representatively, the conductive material may use graphite or conductive carbon, and for example, may use graphite such as natural graphite, artificial graphite, etc.; carbon black such as carbon black, acetylene black, Ketjen black, Denka black, thermal black, channel black, furnace black, lamp black, thermo black, etc.; carbon-based materials with a crystal structure of graphene or graphite; carbon nanotube; conductive fiber such as carbon fiber, metal fiber, etc.; fluoride carbon; metal powder such as aluminum powder, nickel powder, etc.; conductive whiskeys such as zinc oxide, potassium titanate, etc.; conductive oxides such as titanium oxide, etc.; and conductive polymers such as polyphenylene derivatives, etc., alone or in combination of two or more, but is not necessarily limited thereto.

The conductive material may be generally added with 0.5 to 10 parts by weight, preferably 0.5 to 5 parts by weight based on 100 parts by weight of the total weight of the positive electrode, but may not be included in the positive electrode of the present invention. When the content of the conductive material is too large at more than 10 parts by weight, the amount of the positive electrode active material is relatively small, so that the capacity and the energy density may be deteriorated. The method of including the conductive material in the positive electrode is not largely limited, and general methods known in the art such as coating on the positive electrode active material, and the like may be used. Further, if necessary, a second conductive coating layer is added to the positive electrode active material to replace the addition of the conductive material as described above.

Further, in the positive electrode of the present invention, a filler may be selectively added as a component for suppressing the expansion. The filler is not particularly limited so long as the filler may suppress the expansion of the electrode without causing a chemical change in the corresponding battery, and for example, may use olefin polymers such as polyethylene, polypropylene, etc.; fibrous materials such as glass fibers, carbon fibers, etc.; and the like.

The positive electrode may be manufactured by dispersing and mixing the positive electrode active material, the binder, the conductive material, etc. in a dispersant (solvent) to make a slurry and coating the slurry on the positive electrode current collector and then drying and rolling. The dispersant may use N-methyl-2-pyrrolidone (NMP), dimethyl formamide (DMF), dimethyl sulfoxide (DMSO), ethanol, isopropanol, water, and mixtures thereof, but is not necessarily limited thereto.

The positive electrode current collector may use platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), In doped SnO₂ (ITO), F doped SnO₂ (FTO), and alloys thereof, and carbon (C), nickel (Ni), titanium (Ti) or silver (Ag) surface-treated on the surface of aluminum (Al) or stainless steel, but is not necessarily limited thereto. The form of the positive electrode current collector may be in the form of a foil, a film, a sheet, a punched form, a porous body, a foam, and the like.

The negative electrode may be a lithium-based metal and may further comprise a current collector on one side of the lithium-based metal. The current collector may be used as the negative electrode current collector. The negative electrode current collector is not particularly limited so long as it has high conductivity without causing a chemical change in the battery, and may be selected from the group consisting of copper, aluminum, stainless steel, zinc, titanium, silver, palladium, nickel, iron, chromium, alloys thereof and combinations thereof. The stainless steel may be surface-treated with carbon, nickel, titanium or silver, and the alloy may use an aluminum-cadmium alloy, and in addition, plasticity carbon, a non-conductive polymer surface-treated with a conductive material or conductive polymer, and the like may be used. Generally, a copper laminate is applied as the negative electrode current collector.

In addition, the form may be used in various forms such as a film, sheet, a foil, a net, a porous body, a foam, a nonwoven fabric body, etc., with/without fine unevenness formed on the surface. In addition, the negative electrode current collector is a thickness range of 3 to 50 µm. When the thickness of the negative electrode current collector is less than 3 µm, a current collection effect is lowered, while when the thickness is more than 50 µm, the processability is deteriorated when a cell is folded and assembled.

The lithium-based metal may be lithium or a lithium alloy. At this time, the lithium alloy includes an element capable of being alloyed with lithium, and specifically, may be an alloy of lithium and at least one selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge and Al.

The lithium-based metal may have a sheet or foil form, and in some cases, on the current collector, lithium or lithium alloys may be deposited or coated by a dry process or particulate metal and alloys may be deposited or coated by a wet process or the like.

A general separator may be interposed between the positive electrode and the negative electrode. The separator is a physical separator having a function of physically separating the electrode and may be used without particular limitations so long as the separator is used as a general separator, and particularly, it is preferred that the separator has low resistance to the ion movement of the electrolyte and has an excellent electrolyte moisturizing ability.

Further, the separator enables the transport of lithium ions between the positive electrode and the negative electrode while separating or insulating the positive electrode and the negative electrode from each other. Such a separator may be composed of a porous and non-conductive or insulating material. The separator may also be an independent member such as a film, or may be a coating layer added to the positive electrode and/or the negative electrode.

Examples of a polyolefin-based porous film that may be used as the separator may include films formed with polyolefin-based polymer alone, such as polyethylenes such as high density polyethylene, linear low density polyethylene, low density polyethylene, and ultra high molecular weight polyethylene, polypropylene, polybutylene, polypenten, etc. or mixed polymers thereof. Examples of the nonwoven fabric that may be used as the separator may be nonwoven fabrics formed with polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone, polyester, and the like alone or mixed polymers thereof, and these nonwoven fabrics are fabric forms forming porous webs and include a spunbond or meltblown form configured composed of long fibers.

The thickness of the separator is not particularly limited, but is preferably in the range of 1 to 100 µm, more preferably in the range of 5 to 50 µm. When the thickness of the separator is less than 1 µm, the mechanical properties may not be maintained, and when the thickness is more than 100 µm, the separator acts as a resistance layer to deteriorate the performance of the battery. The pore size and the porosity of the separator are not particularly limited, but the pore size is 0.1 to 50 µm, and the porosity is preferably 10% to 95%. When the pore size of the separator is less than 0.1 µm or the porosity is less than 10%, the separator acts as a resistance layer, and when the pore size of the separator is more than 50 µm or the porosity is more than 95%, the mechanical properties may not be maintained.

The lithium-sulfur battery of the present invention, including the electrolyte, the positive electrode, the negative electrode, and the separator as such, may be manufactured through a process of facing the positive electrode and the negative electrode, interposing the separator therebetween, and then injecting the electrolyte.

Meanwhile, the lithium-sulfur battery according to the present invention may be applied to a battery cell used as a power source of small devices and particularly suitably used as a unit cell of a battery module as a power source of a large and medium-sized device. In this aspect, the present invention also provides a battery module in which two or more lithium-sulfur batteries are electrically connected to each other (serially or in parallel) and included. Of course, the number of lithium-sulfur batteries included in the battery module may be variously adjusted in consideration of the use and capacity of the battery module. Furthermore, the present invention provides a battery pack electrically connecting battery modules according to a conventional technique in the art. The battery module and the battery pack can be used as a power source of at least one large and medium-sized device of power tools; electric vehicles such as an electric vehicle (EV), a hybrid electric vehicle (HEV), and a plug-in hybrid electric vehicle (PHEV); electric trucks; electrical commercial vehicles; or power storage systems, but is not necessarily limited thereto.

### [Modes for the Invention]

Hereinafter, preferred Examples will be provided to help in understanding of the present invention. However, the following Examples are just illustrative of the present invention, and it will be apparent to those skilled in the art that various changes and modifications can be made within the scope and the technical idea of the present invention and it is natural that these variations and modifications are within the scope of the appended claims.

### [Example 1] Manufacture of lithium-sulfur battery

### Preparation of electrolyte

First, LiTFSI (concentration: 0.65 M), dimethoxyethane (a second solvent) and 1,1,2,2-tetrafluoroethyl 2,2,3,3-tetrafluoropropyl ether (TTE, a first solvent) were mixed at a molar ratio of 1:2:9 under room temperature to prepare an electrolyte for a lithium-sulfur battery.

### Preparation of positive electrode

90 parts by weight of a sulfur-carbon composite (weight ratio of S:C = 75:25) as a positive active material (the content of sulfur alone was set to be 67.5 wt% with respect to the total weight of the positive electrode and the carbon material used an activated carbon having a pore volume of 1.8 cm³/g), 5 parts by weight of denka black as a conductive material, and 5 parts by weight of styrene butadiene rubber/carboxymethyl cellulose (SBR:CMC = 7:3) as a binder were mixed to prepare a positive electrode slurry composition. Then, the prepared slurry composition was coated on a current collector (Al Foil), dried for 12 hours at 50°C, and pressed with a roll press to prepare a positive electrode (at this time, a loading amount was 3.5 mAh/cm², and the porosity of the battery was 65%).

### Manufacture of lithium-sulfur battery

The prepared positive electrode was located to face a lithium metal negative electrode with a thickness of 150 µm, a polyethylene (PE) separator was interposed therebetween, and then the prepared electrolyte was injected to manufacture a coin cell type lithium-sulfur battery. Meanwhile, in the manufacture of the battery, the positive electrode was stamped and used as a 14 phi circular electrode and the polyethylene separator was stamped and used as 19 phi, and the lithium metal was stamped and used as 16 phi. In addition, the battery was manufactured by applying a sparing solvating electrolyte (SSE) system.

### [Comparative Example 1] Manufacture of lithium-sulfur battery

Except for changing dimethoxyethane to acetonitrile as one of electrolyte solvents, a lithium-sulfur battery was manufactured in the same manner as Example 1.

### [Comparative Example 2] Manufacture of lithium-sulfur battery

Except that the mixed ratio of LiTFSI, dimethoxyethane (the second solvent), and 1,1,2,2-tetrafluoroethyl 2,2,3,3-tetrafluoropropyl ether (TTE, the first solvent) was changed to a molar ratio of 1:0.8:4, and a sulfur-carbon composite was used as a positive electrode active material, but the weight ratio of S:C of the sulfur-carbon composite was changed to 46:64, so that the content of sulfur alone was 41 wt% based on the total weight of the positive electrode, a lithium-sulfur battery was manufactured in the same manner as Example 1.

### [Comparative Example 3] Manufacture of lithium-sulfur battery

Except for changing the mixed ratio of LiTFSI, dimethoxyethane (the second solvent), and 1,1,2,2-tetrafluoroethyl 2,2,3,3-tetrafluoropropyl ether (TTE, the first solvent) to a molar ratio of 1:1:4, a lithium-sulfur battery was manufactured in the same manner as Example 1.

### [Experimental Example 1] Evaluation of discharge capacity and lifetime characteristic of lithium-sulfur battery

The lithium-sulfur batteries manufactured in Example 1 and Comparative Examples 1 to 3 were charged and discharged at 0.1 C during 3 cycles and then the discharge capacity and lifetime characteristic of the battery were evaluated. At this time, a used voltage range was 1.0 to 3.0 V (i.e., the discharge was up to 1.0 V and the charge was up to 3.0 V), and the evaluation temperature was set to 25°C and 35°C, respectively (however, Comparative Example 1 was evaluated even at 45°C).

FIGS. 1 and 2 are graphs showing discharge capacities and lifetime characteristics of the lithium-sulfur batteries manufactured according to an embodiment of the present invention and Comparative Example, wherein FIGS. 1a and 2a correspond to Example 1 and FIGS. 1b, 2b, and 2c correspond to Comparative Example 1. First, referring to FIG. 1 of setting an evaluation temperature to 25°C, it was confirmed that the lithium-sulfur battery of Example 1 of using only the ether-based solvent without including the nitrile-based solvent in the electrolyte is excellent in both initial discharge capacity and lifetime characteristic as compared with the lithium-sulfur battery of Comparative Example 1 including the nitrile-based solvent in the electrolyte. Particularly, it was confirmed that in the lithium-sulfur battery of Example 1, the initial discharge capacity is close to 1,675 mAh/g, which is the theoretical capacity of sulfur, and has an initial discharge capacity value as a level at which the typical lithium-sulfur battery applied with the SSE electrolyte system is not yet exhibited up to now.

Further, as illustrated in FIG. 2, even when the evaluation temperature was set to 35°C, a similar result was shown, and in the case of Comparative Example 1 of setting the evaluation temperature to 45°C, the lifetime characteristic was improved to some extent as compared with being evaluated at 25°C and 35°C, but a significantly low lifetime characteristic was still exhibited as compared with the level of Example 1.

Meanwhile, the same electrolyte configuration as Example 1 was taken, but the used amount of the first solvent (including the fluorine-based ether compound) was relatively small. Further, even in the case of Comparative Example 2 in which the sulfur content in the positive electrode was lower than that of Example 1, a very bad result was exhibited as compared with the initial discharge capacity and the lifetime characteristic of Example 1. In the case of Comparative Example 3 of reducing only the used amount of the first solvent (including the fluorine-based ether compound), the result was largely inferior to the initial discharge capacity and the lifetime characteristic of Example 1.

As a result, it could be seen that the lithium-sulfur battery applied with the SSE electrolyte system may maximize the performance of the battery only by increasing the mixed ratio of the fluorine-based ether solvent in the electrolyte to the level of the present invention and increasing the content ratio of sulfur in the positive electrode to the level of the present invention without including the nitrile-based solvent in the electrolyte.

## Claims

1. A lithium-sulfur battery comprising:
an electrolyte including a first solvent containing a fluorine-based ether compound, a second solvent containing a glyme-based compound, and a lithium salt; and
a positive electrode including sulfur and a carbon material as active materials,
wherein a utilization rate of sulfur included in the positive electrode is 90% or higher of a theoretical discharge capacity.

2. The lithium-sulfur battery of claim 1, wherein the fluorine-based ether compound includes at least one hydrofluoroether-based compound selected from the group consisting of 1,1,2,2-tetrafluoroethyl 2,2,3,3-tetrafluoropropyl ether (TTE), bis(fluoromethyl)ether, 2-fluoromethyl ether, bis(2,2,2-trifluoroethyl ether, propyl 1,1,2,2-tetrafluoroethyl ether, isopropyl 1,1,2,2-tetrafluoroethyl ether, 1,1,2,2-tetrafluoroethylisobutyl ether, 1,1,2,3,3,3-hexafluoropropyl ethyl ether, 1H,1H,2'H,3H-decafluorodopropyl ether and 1H,1H,2'H-perfluorodipropyl ether.

3. The lithium-sulfur battery of claim 1, wherein the glyme-based compound includes at least one selected from the group consisting of dimethoxy ethane, diethoxy ethane, methoxyethoxy ethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, and polyethylene glycol methyl ethyl ether.

4. The lithium-sulfur battery of claim 1, wherein the lithium salt includes at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, chloroboran lithium, low aliphatic carboxylic acid lithium having 4 carbon atoms or less, 4-phenyl boric acid lithium, and lithium imide.

5. The lithium-sulfur battery of claim 1, wherein the concentration of the lithium salt is 0.1 M to 2 M.

6. The lithium-sulfur battery of claim 1, wherein a molar ratio of the lithium salt, the second solvent and the first solvent is 1:0.5 to 3:4.1 to 15.

7. The lithium-sulfur battery of claim 1, wherein the electrolyte does not include a nitrile-based solvent.

8. The lithium-sulfur battery of claim 1, wherein the sulfur is included in 60 wt% to 80 wt% with respect to the total weight of the positive electrode.

9. The lithium-sulfur battery of claim 1, wherein the pore volume of the carbon material is 0.7 cm³/g to 3 cm³/g.

10. The lithium-sulfur battery of claim 1, wherein a positive electrode active material included in the positive electrode comprises a sulfur-carbon composite.

11. The lithium-sulfur battery of claim 1, wherein the utilization rate of sulfur included in the positive electrode is 94% to 100% of the theoretical discharge capacity.

12. The lithium-sulfur battery of claim 1, wherein the energy density of the lithium-sulfur battery is 400 Wh/kg or higher or 600 Wh/L or higher.
